# EUROPEAN PATENT APPLICATION

(11) **EP 3 627 416 A1**
(43) Date of publication of application: **25.03.2020**
(21) Application number: 18802936.7
(22) Date of filing: 15.05.2018
(51) Int. Cl.: G06Q 10/10

(54) **METHOD BASED ON FORM FIELDS FOR ARRANGING EXAMINATION AND APPROVAL ROLES AT WORKFLOW EXAMINATION AND APPROVAL NODES**

(30) Priority: 16.05.2017 CN 201710345031
(71) Applicant: Chengdu Qianniucao Information Technology Co., Ltd, Chengdu, Sichuan 610000 (CN)
(72) Inventor: CHEN, Dazhi, Meishan Sichuan 620000 (CN)
(74) Representative: Bandpay & Greuter
(86) International application number: PCT/CN2018/086933
(87) International publication number: WO 2018/210248

(57) **Abstract**

A method for setting approval roles at workflow approval nodes based on form fields is disclosed in the present invention, including: setting a system organization structure; and selecting one of a role attribute field, a department attribute field or a submission role of the approval process in a form as a level subject; after selecting the level subject, determining a level by using the selected subject as a judgment criterion; and filling in a specific level value. In the present invention, according to requirements, the role attribute field, the department attribute field or the submission role involved in the form may be used as a criterion for determining a department level. If a signing role in a contract form is selected as a level subject, the signing role (rather than a submission role by default all the time) is used as a criterion for determining a level, so as to determine an approval role of an approval node. The method is more flexible and convenient in use, and high in universality. A system provides a specified group to approve an approval request submitted by a top-level department supervisor, thereby avoiding the problem that the top-level department supervisor cannot complete an approval process by means of level approval.

## Description

### BACKGROUND

### Technical Field

The present invention relates to a setting and management method for an approval role at an approval node in a workflow in a management software system such as an ERP system, and more particularly to a method for setting approval roles at workflow approval nodes based on form fields.

### Related Art

Role-based access control (RBAC) is one of the most researched and mature permission management mechanisms for databases in recent years. It is considered to be an ideal candidate to replace conventional mandatory access control (MAC) and discretionary access control (DAC). Conventional discretionary access control has high flexibility but low security. Mandatory access control is highly secure but too restrictive. Role-based access control combines both above, and not only is easy to manage, but also reduces complexity, costs, and probability of errors. Therefore, it has been greatly developed in recent years. The basic idea of role-based access control (RBAC) is to divide different roles according to different functional positions in the enterprise organization view, encapsulate the access permission of database resources in roles, and allow users to indirectly access database resources by assigning different roles to the users.

A large number of tables and views are often built in large-scale application systems, which makes the management and permissions of database resources very complicated. It is very difficult for the user to directly manage the access and permissions of the database resources. It requires the user to have a very thorough understanding of the database structure and to be familiar with the use of the SQL language. Once the application system structure or security requirements have changed, a large number of complex and cumbersome permission changes are required, and the security vulnerabilities caused by unexpected authorization errors are very likely to occur. Therefore, designing a simple and efficient permission management method for large-scale application systems has become a common requirement for systems and system users.

The role-based permission control mechanism can manage the access permissions of the system simply and efficiently, which greatly reduces the burden and cost of the system permission management, and makes the system permission management more compliant with the business management specifications of the application system.

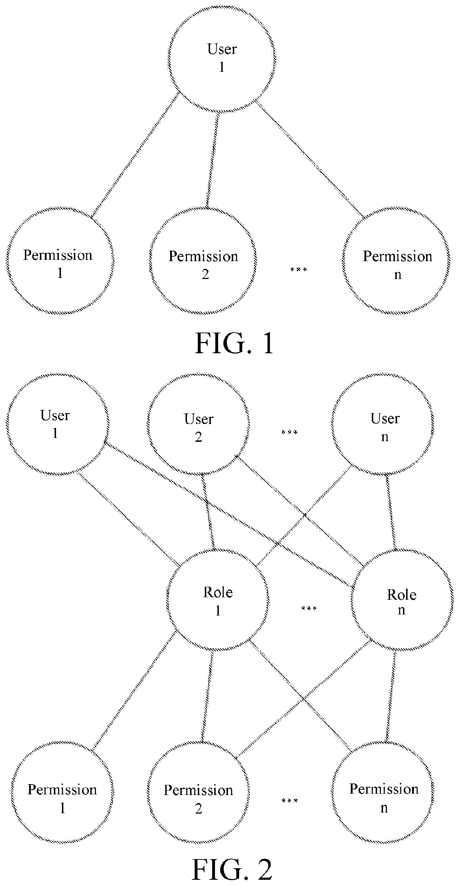

However, the conventional role-based permission management and workflow control methods for a user adopt the "role-to-user one-to-many" relation mechanism, where the "role" is a group or class in nature. That is, one role can simultaneously correspond to or be related to multiple users, and the role is similar to a post or a position or a type of work or other concepts. The permission granted to a user under this relation mechanism is basically divided into the following three forms: 1. As shown in FIG. 1, the permission is directly granted to the user, where the disadvantage is that the workload is large and the operation is frequent and cumbersome. In the approval process, the approval operation subject of the approval node is the user, and at the workflow approval node, an employee or user is selected directly as an approval subject. When changes on the employee have occurred (such as transfer or resignation), all processes related to the employee shall be adjusted accordingly. Especially, for changes on an employee in a management position of an enterprise, many approval processes are involved. As the adjustment of the processes involves large workloads and is cumbersome, errors or omissions are likely to occur, affecting the normal operation of the enterprise and even causing unpredictable losses.

Even if the change only occurs in the approval permissions of the employee, it is still necessary to correspondingly adjust the processes related to the employee, and similar problems described above still occur.

2. As shown in FIG. 2, the role (of a class/group/post/work type nature) is authorized (one role may be related to multiple users), the user obtains permissions through its role, and the approval operation subject is the role of a group or class nature.

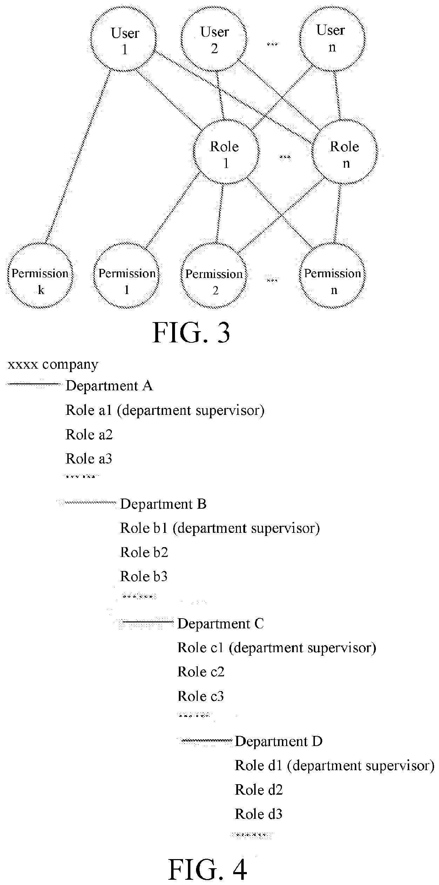

3. As shown in FIG. 3, the above two methods are combined.

In the above descriptions, as both 2 and 3 need to authorize the role of a class or group nature. The way of authorization and workflow control through the role of a class/group/post/work type nature has the following disadvantages: 1. Operations are difficult when the user's permission has changed. In the actual process of using a system, the user's permissions often need to be adjusted during the operation process. For example, in processing of the change in an employee's permissions, when the permissions of an employee related to the role have changed, it is improper to change the permissions of the entire role due to the change in the permissions of the individual employee, because this role is also related to other employees whose permissions remain unchanged. To cope with this situation, either a new role is created to fit the employee whose permissions have changed, or permissions are directly granted to the employee (disengaged from the role) based on permission requirements. The above two processing methods not only take a long time but also cause mistakes easily for the role authorization in the case of a large number of role permissions. It is cumbersome for a user to operate, and errors occur easily, resulting in loss to the system user.

When the approval permissions of the employee or user have changed, either the employee or the user is disengaged from the role, and at the workflow approval node, the employee or the user is directly selected as an approval subject, or a new role is added to meet the requirements of the approval process. In the first way, when changes on an employee have occurred (such as transfer or resignation), all processes related to the employee shall be adjusted accordingly. Especially, for changes on an employee in a management position of an enterprise, many approval processes are involved. As the adjustment of the processes involves large workloads, errors or omissions are likely to occur, affecting the normal operation of the enterprise and even causing unpredictable losses. Even if the change only occurs in the approval permissions of the employee, it is still necessary to correspondingly adjust the processes related to the employee, and similar problems described above still occur. In the second way, adding a new role involves creation, relation, and authorization of the role. Especially when there are many roles and many users related to the roles, it is difficult to remember which users are related to the role.
2. It is difficult to remember the specific permissions contained in a role for a long time. If the role has many permission function points, as time goes by, it is difficult to remember the specific permissions of the role, and it is even harder to remember the permission differences between roles with similar permissions. The permissions of similar roles are also easily confusable. If a new user needs to be related, it is impracticable to accurately determine how to select a relation.
3. Because user permissions change, more roles will be created (if new roles are not created, direct authorization to the user will be increased greatly), and it is more difficult to distinguish specific differences between permissions of the roles.
4. When a user is transferred from a post, if many permissions of the transferred user need to be assigned to other users, distinguishing the permissions of the transferred user and creating roles to relate to the other users are necessary during the processing. Such operations are not only complicated and time-consuming, but also prone to errors.

The conventional workflow approval mechanism has the following deficiencies:
(1) A process initiator himself cannot be selected as an approver at the approval node, and therefore, before the approval process is ended, the initiator of the approval process cannot review and confirm an approval result of an application submitted by himself. For example, when the initiator initiates a 10000 RMB reimbursement approval request, due to an error in the content submitted by the initiator or other reasons, the approved reimbursement amount is modified to be 500 RMB after multistage approval. Therefore, the final approval result only allows a reimbursement of 500 RMB before the approval process is ended. If the initiator has an objection after receiving the approval result, the initiator should cancel the result of the previous approval process and then resubmit an approval application, which increases the internal friction of the system and reduce the approval efficiency.
(2) For trans-provincial and transnational group companies and the like with complex organization structures, a large number of approval processes are involved, and circulation conditions and circulation lines of the approval processes are also very complicated. For personnel who are responsible for setting system processes, the workload is very large, and mistakes are made easily during the setting of the approval processes. Therefore, the system cannot be used conveniently, accompanied with low reliability.
(3) When the approval is set according to levels, the system cannot implement approval of an approval request submitted by a top-level department supervisor, and it is generally necessary to separately assign a dedicated approval role to the top-level department supervisor, which increases the workload of personnel who are responsible for setting a system workflow.
(4) Only a submission role of an approval process can be used as a judgment criterion to determine a department level, and other roles or departments involved in a form cannot be customized as a criterion for determining the department level. There is certain limitation in usage.

For example, in an approval process of a contract, a role signing the contract is on a leave and asks his/her colleague to initiate a contract approval process on behalf of him/her; the system considers his/her colleague as a submission role of the process, and determines a level based on the colleague during level approval, which cannot objectively reflect the department and position of the role signing the contract. For example, the role signing the contract is a salesman 1 in a market department, but the role of his/her colleague is a developer 1 in a research and development department. The contract should be originally approved by a supervisor of the department to which the signing role belongs, that is, a supervisor role in the market department. When an approval level of an approval node is set to 1, the system will assign the contract to be approved by a supervisor of the department to which the developer 1 belongs, that is, a supervisor role in the research and development department, causing an assignment error of the approval process and inconvenience in use.

### SUMMARY

### Technical Problems

The object of the present invention is to overcome the deficiencies of the prior art, and provide a method for setting approval roles at workflow approval nodes based on form fields, to customize, according to requirements, a role attribute field, a department attribute field or a submission role involved in a form as a criterion for determining a department level, so as to determine an approval role. The use is more flexible and convenient.

### Solutions to Problems

### Technical Solutions

The object of the present invention is achieved by the following technical solutions:

A method for setting approval roles at workflow approval nodes based on form fields includes a step of setting a system organization structure and a step of setting an approval role according to a department level:
wherein the step of setting the system organization structure includes the following sub-steps:
   SS1: creating departments and roles included in the system organization structure; and
   SS2: setting a hierarchical relationship among the departments, and setting a department supervisor role in each department;
the step of setting the approval role according to the department level includes:
   SSS1: selecting a level-based method for setting an approval role;
   SSS2: selecting one of a role attribute field, a department attribute field, or a submission role of an approval process in a form corresponding to the approval process as a level subject; and
   SSS3: filling in a specific level value n, n being a positive integer greater than or equal to 0: (1) selecting the role attribute field in the form corresponding to the approval process as the level subject, and determining a level by using a role corresponding to the field as a judgment criterion: ① when n=0, the role corresponding to the field serves as an approval role of the approval node; ② when n=1, a department supervisor role in a department to which the role corresponding to the field belongs serves as the approval role of the approval node; and if the role corresponding to the field is the department supervisor role in the department to which it belongs, a department supervisor role in a department that is one level higher than the department to which the role corresponding to the field belongs serves as the approval role of the approval node; ③ when n=2, the department supervisor role in the department that is one level higher than the department to which the role corresponding to the field belongs serves as the approval role of the approval node; ④ when n=3, a department supervisor role in a department that is two levels higher than the department to which the role corresponding to the field belongs serves as the approval role of the approval node; (⑤ when n=4, a department supervisor role in a department that is three levels higher than the department to which the role corresponding to the field belongs serves as the approval role of the approval node; ⑥ the rest is done by that analogy; and ⑦ when the setting of the department level exceeds a top-level department in the system organization structure, a department supervisor role in the top-level department serves as the approval role of the approval node; (2) selecting the department attribute field in the form corresponding to the approval process as the level subject, and determining a level by using a department corresponding to the field as a judgment criterion: ① when n=0, a department supervisor role in the department corresponding to the field serves as an approval role of the approval node; ② when n=1, a department supervisor role in a department that is one level higher than the department corresponding to the field serves as the approval role of the approval node; ③ when n=2, a department supervisor role in a department that is two levels higher than the department corresponding to the field serves as the approval role of the approval node; ④ when n=3, a department supervisor role in a department that is three levels higher than the department corresponding to the field serves as the approval role of the approval node; ⑤ the rest is done by that analogy; and ⑥ when the setting of the department level exceeds a top-level department in the system organization structure, a department supervisor role in the top-level department serves as the approval role of the approval node; (3) selecting the submission role of the approval process as the level subject, and determining a level by using the submission role as a judgment criterion: ① when n=0, the submission role of the workflow approval process serves as an approval role of the approval node; ② when n=1, a department supervisor role in a department to which the submission role of the workflow approval process belongs serves as the approval role of the approval node; and if the submission role is the department supervisor role in the department to which it belongs, a department supervisor role in a department that is one level higher than the department to which the submission role belongs serves as the approval role of the approval node; ③ when n=2, the department supervisor role in the department that is one level higher than the department to which the submission role of the workflow approval process belongs serves as the approval role of the approval node; ④ when n=3, a department supervisor role in a department that is two levels higher than the department to which the submission role of the workflow approval process belongs serves as the approval role of the approval node; ⑤ when n=4, a department supervisor role in a department that is three levels higher than the department to which the submission role of the workflow approval process belongs serves as the approval role of the approval node; ⑥ the rest is done by that analogy; and ⑦ when the setting of the department level exceeds a top-level department in the system organization structure, a department supervisor role in the top-level department serves as the approval role of the approval node.

When level approval is selected at an approval node, an approval permission is granted to each corresponding approval role in a level, and then all corresponding approval roles in the level have the same approval permission.

The role attribute field and the department attribute field in the form are mandatory options.

The workflow control method includes the following steps: S1: building a three-layer structure model of user-role-permission that includes: a role layer, wherein an operation subject of process approval in a workflow is a role, each role is an independent individual rather than a group or class, one role can only be related to a unique user during the same period, and one user is related to one or more roles; a permission layer composed of permissions required to be used in the execution of the workflow, wherein each permission is directly granted to a role; and a user layer, wherein a user determines an approval task in the workflow through a related role, and performs an approval operation with the permission of the related role; S2: using the three-layer structure model to control the workflow, wherein one approval process includes: one start node initiating or requesting or submitting the workflow; further, the submission role initiates or requests or submits the workflow, and only a role having the permission to start a workflow can initiate or request or submit the workflow as the submission role; a system determines an approval process based on a form submitted by the submission role, and one or more approval processes are designed for a form that requires a workflow, but one role can only select one approval process under the form; at least one approval node setting a level of an approval department and granting approval permission to a corresponding approval role in the level; and one end node, to which the approval process comes and then is ended; and S3: determining, according to a user's related role, an approval task to be processed, and performing an approval operation with the permission of the related role.

One or more approval roles are selected at an approval node, one role can exist at different approval nodes in one approval process, and the approval role may own different permissions for viewing and modifying a form field at different approval nodes.

One or more approval roles are selected at an approval node, an approval role's permission is set at the approval node, and the permission can be independently set for each approval role of each approval node.

The step S1 includes the following sub-steps: (1) creating a role, wherein each role is an independent individual rather than a group or class; (2) authorizing roles created in the step (1) respectively; and (3) relating a user to a role, wherein one role can only be related to a unique user during the same period, and one user is related to one or more roles.

The step (1) is performed first, and the step (2) and the step (3) have no sequential relationship.

The role belongs to a certain department, a name of the role is unique under the department, and a number of the role is unique in a system; a specific step of managing cross-department transfer of a user includes: (1) canceling the user's relation to the role in the original department; and (2) relating the user to a role in a new department.

The user determines a permission through its relation to the role, one employee corresponds to one user account, and one user account corresponds to one employee.

The role is composed of: a post name + a post number.

A method for setting approval roles at workflow approval nodes based on form fields includes a step of setting a system organization structure and a step of setting an approval role according to a department level:
wherein the step of setting the system organization structure includes the following sub-steps:
   SS1: creating departments and roles included in the system organization structure; and
   SS2: setting a hierarchical relationship among the departments, and setting a department supervisor role in each department;
the step of setting the approval role according to the department level includes:
   SSS1: selecting a level-based method for setting an approval role;
   SSS2: selecting one of a role attribute field, a department attribute field, or a submission role of an approval process in a form corresponding to the approval process as a level subject; and
   SSS3: filling in a specific level value n, n being a positive integer greater than or equal to 0: (1) selecting the role attribute field in the form corresponding to the approval process as the level subject, and determining a level by using a role corresponding to the field as a judgment criterion: ① when n=0, the role corresponding to the field serves as an approval role of the approval node; ② when n=1, a department supervisor role in a department to which the role corresponding to the field belongs serves as the approval role of the approval node; and if the role corresponding to the field is the department supervisor role in the department to which it belongs, a department supervisor role in a department that is one level higher than the department to which the role corresponding to the field belongs serves as the approval role of the approval node; ③ when n=2, the department supervisor role in the department that is one level higher than the department to which the role corresponding to the field belongs serves as the approval role of the approval node; ④ when n=3, a department supervisor role in a department that is two levels higher than the department to which the role corresponding to the field belongs serves as the approval role of the approval node; ⑤ when n=4, a department supervisor role in a department that is three levels higher than the department to which the role corresponding to the field belongs serves as the approval role of the approval node; ⑥ the rest is done by that analogy; ⑦ when the setting of the department level exceeds a top-level department in the system organization structure, a department supervisor role in the top-level department serves as the approval role of the approval node; and ⑧ when n≥1, it is necessary set that the approval node is approved by a specified group when "the role corresponding to the field is the department supervisor role in the department to which it belongs and there is no higher level department over this department"; (2) selecting the department attribute field in the form corresponding to the approval process as the level subject, and determining a level by using a department corresponding to the field as a judgment criterion: ① when n=0, a department supervisor role in the department corresponding to the field serves as an approval role of the approval node; ② when n=1, a department supervisor role in a department that is one level higher than the department corresponding to the field serves as the approval role of the approval node; ③ when n=2, a department supervisor role in a department that is two levels higher than the department corresponding to the field serves as the approval role of the approval node; ④ when n=3, a department supervisor role in a department that is three levels higher than the department corresponding to the field serves as the approval role of the approval node; ⑤ the rest is done by that analogy; ⑥ when the setting of the department level exceeds a top-level department in the system organization structure, a department supervisor role in the top-level department serves as the approval role of the approval node; and ⑦ when n≥1, it is necessary to set that the approval node is approved by a specified group when "there is no higher level department over this department corresponding to the field"; (3) selecting the submission role of the approval process as the level subject, and determining a level by using the submission role as a judgment criterion: ① when n=0, the submission role of the workflow approval process serves as an approval role of the approval node; ② when n=1, a department supervisor role in a department to which the submission role of the workflow approval process belongs serves as the approval role of the approval node; and if the submission role is the department supervisor role in the department to which it belongs, a department supervisor role in a department that is one level higher than the department to which the submission role belongs serves as the approval role of the approval node; ③ when n=2, the department supervisor role in the department that is one level higher than the department to which the submission role of the workflow approval process belongs serves as the approval role of the approval node; ④ when n=3, a department supervisor role in a department that is two levels higher than the department to which the submission role of the workflow approval process belongs serves as the approval role of the approval node; ⑤ when n=4, a department supervisor role in a department that is three levels higher than the department to which the submission role of the workflow approval process belongs serves as the approval role of the approval node; ⑥ the rest is done by that analogy; ⑦ when the setting of the department level exceeds a top-level department in the system organization structure, a department supervisor role in the top-level department serves as the approval role of the approval node; and ⑧ when n≥1, it is necessary to set that the approval node is approved by a specified group when "the submission role is the department supervisor role in the department to which it belongs and there is no a higher level department over this department"; the approval by the specified group includes one of the following three cases: (1) the specified group is composed of one or more approval roles; (2) the specified group is determined according to the department level, during selection of the level subject, only the level subject selected for the approval node can be used continuously, and the level value n can only be set to 0; and (3) the specified group is determined according to the department level, the level subject can be selected independently, the specified group includes one or more specified nodes, and when the level value n of the specified node is not 0, a next-level specified node needs to be set, until the level value n of the specified node is 0, thereby completing setting of the specified group of the approval node.

### Beneficial Effects of the Invention

### Beneficial Effects

The present invention has the following beneficial effects: (1) in a conventional level approval method, only a submission role of an approval process can be used as a judgment criterion to determine a department level, and other roles or departments involved in a form cannot be customized as a criterion for determining the department level. There is certain limitation in usage.

For example, in an approval process of a contract, a role signing the contract is on a leave and asks his/her colleague to initiate a contract approval process on behalf of him/her; the system considers his/her colleague as a submission role of the process, and determines a level based on the colleague during level approval, which cannot objectively reflect the department and position of the role signing the contract. For example, the role signing the contract is a salesman 1 in a market department, but the role of his/her colleague is a developer 1 in a research and development department. The contract should be originally approved by a supervisor of the department to which the signing role belongs, that is, a supervisor role in the market department. When an approval level of an approval node is set to 1, the system will assign the contract to be approved by a supervisor of the department to which the developer 1 belongs, that is, a supervisor role in the research and development department, causing an assignment error of the approval process and inconvenience in use.

In the present application, according to requirements, the role attribute field, the department attribute field or the submission role involved in the form may be used as a criterion for determining a department level. For example, in the case that an approval node is set, a signing role in a contract form may be selected as a level subject, and the signing role (rather than the submission role by default all the time) is used as a criterion for determining a level, so as to determine that the approval role is the supervisor role in the market department. The use is more flexible and convenient, and high universality is achieved.

(2) A system provides an approval mechanism for a top-level department supervisor, avoiding the problem that the top-level department supervisor cannot complete an approval process by means of level approval.

For example, when a chairman, as the top-level leader of an enterprise, submits an approval request, although there is no superior department over the chairman in level approval, a specified group is set to approve the approval request submitted by the chairman.

The approval by the specified group includes one of the following three cases: ① The specified group is composed of one or more approval roles. For example, a plurality of members of the board of supervisors forms the specified group, and the approval request of the chairman is approved by the members of the board of supervisors. ② The specified group is determined according to the department level, during selection of the level subject, only the level subject selected for the approval node can be used continuously, and the level value n can only be set to 0. This is applicable to a case where the enterprise organization structure changes. For example, the original top-level supervisor of a company is a general manager, but after the organization structure has changed, a board of directors is newly added to the organization structure, and a chairman becomes the top-level supervisor; the level value in the approval node is 0, and then the approval role automatically becomes the chairman, rather than the general manager unchanged. This avoids the problem that the approval role cannot fit the change in the organization structure. ③ The specified group is determined according to the department level, the level subject can be selected independently, the specified group includes one or more specified nodes, and when the level value n of the specified node is not 0, a next-level specified node needs to be set, until the level value n of the specified node is 0, thereby completing the setting of the specified group of the approval node. This is applicable to a case where an ordinary department role approves an approval request submitted by a top-level department supervisor. For example, a financial supervisor of a financial department can approve invoice information involved in a contract approval request submitted by a chairman, and a final result needs to be confirmed by the chairman.

(3) When an approval role is set at an approval node, a department level n may be set to 0, that is, a submission role itself is selected as the approval role in the approval node. Before the approval process is ended, the submission role itself may confirm the approval, and may go back to re-approval after choosing a disagreement or enter the next link after choosing an agreement. A submission role reviewing process is added, thus avoiding the problem that an approval process needs to be newly created (or re-submitted) because the approval result is incorrect or the approval result is not compliant with the expectation of the submission role, thereby reducing the internal friction of the system, and improving the efficiency and reliability of the approval process.

For example, when the submission role submits a 10000 RMB reimbursement approval request, due to an error in the content submitted by the submission role or other reasons, the approved reimbursement amount is modified to be 500 RMB after multistage approvals. Before the approval process is ended, the submission role, as the approval role, can review and confirm to find the problem, and may go back to re-approval after choosing a disagreement or enter the next link after choosing an agreement. Therefore, it is unnecessary to newly create (or re-submit) an approval process.

(4) Based on the method for setting approval roles according to department levels, personnel who are responsible for setting a system workflow only need to select a level subject and input a level value when setting an approval role. Multiple approval processes can be effectively integrated in one approval process, which can effectively reduce circulation conditions and circulation lines, reduce the workload of the personnel who are responsible for setting the system workflow, and improve the system reliability. For example, in a fee reimbursement approval process, level approval is set at an approval node, and a department level is set to 1. Then, all fee reimbursements at the approval node are automatically approved by a department supervisor role in a department to which a submission role belongs.

(5) The subject of the approval operation in the workflow is the role that is an independent individual rather than a conventional role of a group or class nature. Even if changes on an employee or a user have occurred (such as transfer or resignation), or if the approval permissions of the employee have changed, it is only necessary to relate the employee to a new role, or adjust the approval permissions of the existing role accordingly, but not necessary to reset or adjust processes. As the setting is convenient and no errors or omissions will occur, the normal operation of the enterprise will not be affected, and the reliability of the workflow is greatly improved. The role of a post number nature is taken as the subject of the approval authorization at a node of the approval link. The user determines which approval tasks are available according to the role. The user only needs to perform approval operations based on the permissions of the related role. It is clear and simple to understand that each role of a post number nature or a work station number nature is a minimum unit of the subject of work. The present application can well satisfy different approval requirements of each role.

(6) In the present application, the role is one-to-one related to the user. One role can only be related to a unique user during the same period. The advantage of this is that whenever a user is created, no operation of assigning permissions is required any more, as long as the user is related to the role, and changes in the permissions of the role are much fewer than the changes in the permissions of the user in a conventional mechanism. Few changes occur in the quantity of roles that are each an independent individual in nature (a post number or a work station number in nature). Although there is large employee turnover, few changes occur in the post number/work station number (even if there is no change in a certain period, that is, the role does not change). This greatly simplifies user's permission management and reduces system overheads.

(7) The operations such as dynamic management, recruitment, and transfer are simple, convenient, efficient and highly reliable. The application of recruitment or departure or transfer in the approval process is simple. The subject of the approval operation of the workflow is the role. When an employee or a user has changed, the approval process does not need to be reset (it is only necessary for a user to cancel the relation or relate to the role). For the user who is no longer in the role of the post number or work station number, the relation to the role is canceled; and the user who takes over the post number or work station number is related to the role of the post number. Therefore, the user related to the role automatically obtains related tasks and permissions of the role in the approval workflow, without resetting the approval workflow or re-authorizing the role in the workflow, thus greatly improving the efficiency, security, and reliability of the process setting.

For example, because Zhang San user is transferred or departs from a post, Zhang San no longer works as a role of "purchaser 3", and Zhang San then cancels the relation to the role. Meanwhile, Li Si takes over the work in the role of "purchaser 3", and then Li Si is related to the role, so Li Si automatically obtains the approval tasks and the approval permissions of the role of "purchaser 3" in the approval process.

(8) The conventional permission management mechanism defines the nature of a group, a work type, a class or the like as the role. The role is in a one-to-many relation to the user. In the actual process of using a system, the user's permissions often need to be adjusted during the operation process. For example, in processing of the change in an employee's permissions, when the permissions of an employee related to the role have changed, it is improper to change the permissions of the entire role due to the change of the permissions of the individual employee, because this role is also related to other employees whose permissions remain unchanged. To cope with this situation, either a new role is created to fit the employee whose permissions have changed, or permissions are directly granted to the employee (disengaged from the role) based on permission requirements. The above two processing methods not only take a long time but also cause mistakes easily for the role authorization in the case of a large number of role permissions. It is cumbersome for a user to operate, and errors occur easily, resulting in loss to the system user.

However, under the method of the present application, as the role is an independent individual, the object can be achieved by changing the permissions of the role. Although the method in the present application seems to increase the workload during system initialization, by means of copying or the like, the role can be created or authorized more efficiently than the conventional roles of a group nature. As it is unnecessary to consider the commonality of the roles of a group nature when satisfying the related users, the solutions in the present application make the permission setting clear and explicit. Especially after the system has been used for a period of time (after the permissions of the user/role have changed dynamically), the solutions in the present application can significantly improve the permission management efficiency for the system user during the use of the system, make the dynamic authorization simpler, more convenient, clearer and more explicit, and improve the efficiency and reliability of the permission setting.

(9) The conventional group-based role authorization method is prone to errors. The method provided in the present application significantly reduces the probability of authorization errors, because the method of the present application only needs to consider the role as an independent individual, without considering the commonality of multiple users related to the role of the group nature under the conventional method. Even if the authorization errors occur, only the user related to the role is affected. However, in the case of the conventional role of the group nature, all users related to the role are affected. Even if the authorization errors occur, the correction method in the present application is simple and takes a short time, while in the case of the conventional role of a group nature, the commonality of the permissions of all users related to the role needs to be considered during the error correction. The modification is cumbersome, complex, and error-prone when the role has many function points, and in many cases, the problem cannot be solved unless a new role is created.

(10) In the conventional group-based role authorization method, if the role has many permission function points, as time goes by, it is difficult to remember specific permissions of the role, and it is even more difficult to remember the differences in permissions between roles with similar permissions. If a new user needs to be related, it cannot be accurately determined how to select a relation. In the method of the present application, the role itself has a nature of a post number or work station number, and the selection can be made easily.

(11) When a user is transferred from a post, if many permissions of the transferred user need to be assigned to other users, in processing, distinguishing the permissions of the transferred user and creating roles to relate to other users respectively are necessary. The operations are complicated, time-consuming, and prone to errors.

The method in the present application is as follows: The transferred user is related to several roles. When the user is transferred, the relation between the user and the roles in the original department is first canceled (the canceled roles may be re-related to other users), and then the user is related to a role in a new department. The operation is simple and not error-prone.

(12) The role belongs to a department, and then the department to which the role belongs cannot be replaced. Reasons why the department to which the role belongs cannot be replaced are as follows. Reason 1: As the role in the present application is equivalent to a work station number or a post number in nature, different work station numbers or post numbers have different work content or permissions. For example, a role of a salesperson 1 under a sales department and a role of a developer 1 under a technical department are two completely different work station numbers or post numbers, and have different permissions. Reason 2: If the department (sales department) to which the role of the salesperson 1 belongs is replaced by the technical department without changing the permissions of the role of the salesperson 1, a role that owns the permissions of the sales department exists in the technical department. This leads to management confusion and security vulnerabilities.

(13) One role can exist at different approval nodes in one approval process. The permissions can be set for each approval role of each approval node independently. The approval role may own different permissions of viewing and modifying the form fields at different approval nodes. Exemplary advantages are as follows: A role is a Chengdu sales manager 3, and in a contract approval workflow, the role exists at two approval nodes: an approval node of Chengdu sales contract, and an approval node of Shanghai sales contract. At the approval node of the Chengdu sales contract, the role can view the content of all fields of a contract, such as a customer name, a contact person, contact information, a product quantity, a unit price of products, and a contract amount, and can modify the unit price of products and the contract amount during approval. However, at the approval node of the Shanghai sales contract, the role cannot view the content of sensitive fields such as a customer name, a contact person, and contact information, and cannot make modifications thereto. In this way, the permissions of the role set in the approval process can be customized.

### BRIEF DESCRIPTION OF THE DRAWINGS

### DESCRIPTION OF THE DRAWINGS

FIG. 1 is a schematic diagram in which a system directly authorizes a user in the prior art;
FIG. 2 is a schematic diagram in which a system authorizes a role of a group or class nature in the prior art;
FIG. 3 is a schematic diagram in which a system both directly authorizes a user and authorizes a role of a group or class nature in the prior art;
FIG. 4 is a tree diagram of a system organization structure in an embodiment;
FIG. 5 is a flowchart of a workflow control method according to the present invention;
FIG. 6 is a schematic diagram in which a system authorizes a user through a role of an independent individual nature according to the present invention;
FIG. 7 is a schematic diagram of a workflow approval process according to the present invention; and
FIG. 8 is a flowchart of a user-role authorization method according to the present invention.

### DETAILED DESCRIPTION

### Description of Embodiments

The technical solutions of the present invention will be described in further detail below with reference to the accompanying drawings, but the protection scope of the present invention is not limited to the following descriptions.
[Embodiment 1] A method for setting approval roles at workflow approval nodes based on form fields includes a step of setting a system organization structure and a step of setting an approval role according to a department level.
   The step of setting the system organization structure includes the following sub-steps:
   SS1: creating departments and roles included in the system organization structure; and
   SS2: setting a hierarchical relationship among the departments, where as shown in FIG. 4, a department A is one level higher than a department B, and the department A is two levels higher than a department C..., and setting a department supervisor role in each department.

   The step of setting the approval role according to the department level includes:
   SSS1: Selecting a level-based method for setting an approval role.
   SSS2: Selecting one of a role attribute field, a department attribute field, or a submission role of an approval process in a form corresponding to the approval process as a level subject; during selection of the level subject, one and only one level subject can be selected; there may be multiple role attribute and department attribute fields on a form (for example, a signing role, a role in charge, a signing department, and a department in charge), but one process only has one process submission role.
   SSS3: Filling in a specific level value n, n being a positive integer greater than or equal to 0 (the value of N may also be replaced with other symbols, for example, a, b, c, and d, where b is one level higher than a, c is two levels higher than a, d is three levels higher than a, and so on). (1) Selecting the role attribute field in the form corresponding to the approval process as the level subject, and determining a level by using a role corresponding to the field as a judgment criterion. For example, if the submission role of the process is d2, but the selected role attribute field in the form is a signing role, the signing role is a role d3: ① when n=0, the selected role d3 serves as an approval role of the approval node; ② when n=1, a department supervisor role d1 in a department D to which the selected role d3 belongs serves as the approval role of the approval node; and if the selected role is the department supervisor role in the department to which it belongs, a department supervisor role in a department that is one level higher than the department to which the selected role belongs serves as the approval role of the approval node; ③ when n=2, a department supervisor role c1 in a department C that is one level higher than the department D to which the selected role d3 belongs serves as the approval role of the approval node; ④ when n=3, a department supervisor role b1 in a department B that is two levels higher than the department D to which the selected role d3 belongs serves as the approval role of the approval node; ⑤ when n=4, a department supervisor role a1 in a department A that is three levels higher than the department D to which the selected role d3 belongs serves as the approval role of the approval node; ⑥ the rest is done by that analogy; and ⑦ when the setting of the department level exceeds a top-level department in the system organization structure, a department supervisor role in the top-level department serves as the approval role of the approval node; for example, for the role d3, the department level should be 4 at maximum, and when the department level is set to 6, the department supervisor role a1 of the top-level department A serves as the approval role of the approval node.
      (2) Selecting the department attribute field in the form corresponding to the approval process as the level subject, and determining a level by using the selected department as a judgment criterion. For example, the selected department attribute field in the form is a signing department, and the signing department is a department D: ① when n=0, a department supervisor role d1 of the selected department D serves as an approval role of the approval node; ② when n=1, a department supervisor role c1 in a department C that is one level higher than the selected department D serves as the approval role of the approval node; ③ when n=2, a department supervisor role b1 in a department B that is two levels higher than the selected department D serves as the approval role of the approval node; ④ when n=3, a department supervisor role a1 in a department A that is three levels higher than the selected department D serves as the approval role of the approval node; ⑤ the rest is done by that analogy; and ⑥ when the setting of the department level exceeds a top-level department in the system organization structure, a department supervisor role in the top-level department serves as the approval role of the approval node; for example, for the department D, the department level should be 3 at maximum, and when the department level is set to 6, the department supervisor role a1 of the top-level department A serves as the approval role of the approval node.
      (3) Selecting the submission role of the approval process as the level subject, and determining a level by using the submission role as a judgment criterion. For example, if the submission role is a role d2: ① when n=0, the submission role d2 of the workflow approval process serves as an approval role of the approval node. When an approval role is set at an approval node, a department level n may be set to 0, that is, the submission role d2 itself is selected as the approval role in the approval node. Before the approval process is ended, the submission role d2 itself may confirm the approval, and may go back to re-approval after choosing a disagreement or enter the next link after choosing an agreement. A submission role reviewing process is added, thus avoiding the problem that a new approval process needs to be created (re-submitted) because the approval result is incorrect or the approval result is not compliant with the expectation of the submission role, thereby reducing the internal friction of the system, and improving the efficiency and reliability of the approval process.

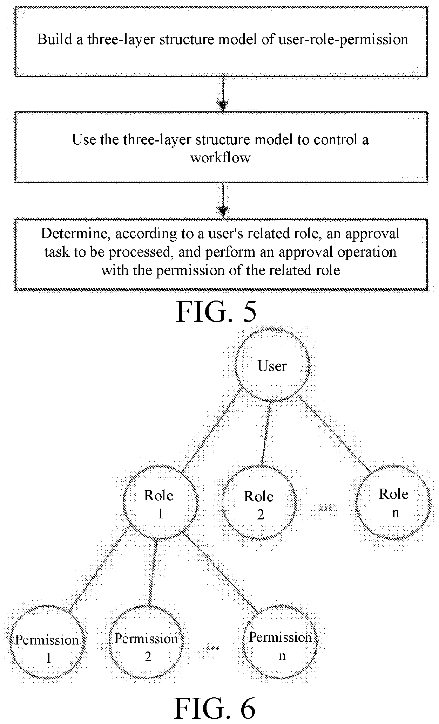

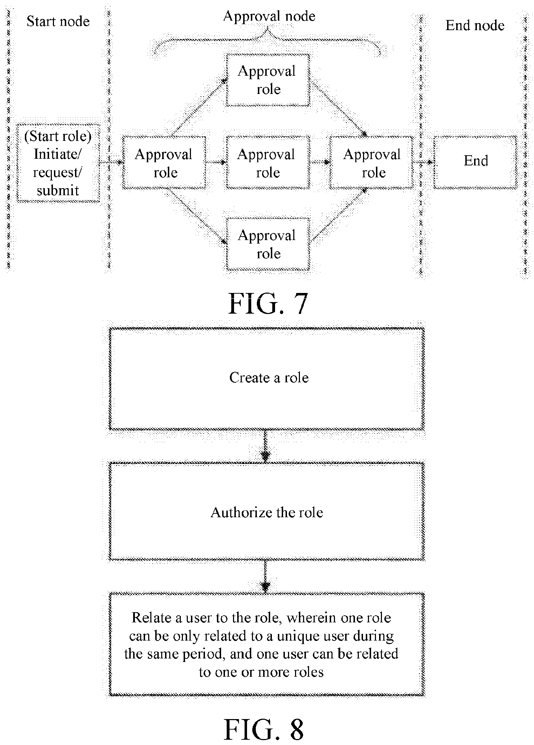

   For example, when the submission role d2 submits a 10000 RMB reimbursement approval request, due to an error in the content submitted by the submission role d2 or other reasons, the approved reimbursement amount is modified to be 500 RMB after multistage approvals. Before the approval process is ended, the submission role d2, as the approval role, can review and confirm to find the problem, and may go back to re-approval after choosing a disagreement or enter the next link after choosing an agreement. Therefore, it is unnecessary to create a new approval process.
   ② when n=1, a department supervisor role d1 in a department D to which the submission role d2 of the workflow approval process belongs serves as the approval role of the approval node (if the submission role is d1, i.e., the department supervisor role in the department D to which it belongs, a department supervisor role c1 in a department C that is one level higher than the department D to which the submission role belongs serves as the approval role of said approval node); ③ when n=2, the department supervisor role c1 in the department C that is one level higher than the department D to which the submission role d2 of the workflow approval process belongs serves as the approval role of said approval node; ④ when n=3, a department supervisor role b1 in a department B that is two levels higher than the department D to which the submission role d2 of the workflow approval process belongs serves as the approval role of the approval node; ⑤ when n=4, a department supervisor role a1 in a department A that is three levels higher than the department D to which the submission role d2 of the workflow approval process belongs serves as the approval role of the approval node; ⑥ the rest is done by that analogy; and ⑦ when the setting of the department level exceeds a top-level department in the system organization structure, a department supervisor role in the top-level department serves as the approval role of the approval node. For example, for the role d2, the department level should be 4 at maximum, and when the department level is set to 6, the department supervisor role a1 of the top-level department A serves as the approval role of the approval node.
   Based on the advantage of the original submission role level-based authorization method, the solution in the present application has another advantage: roles of different attributes may be selected. For example, there are a contract signing role, a role newly added in the contract, and a role in charge of the contract in a contract form. The approval node should not have determined the level according to the submission role, but should determine the level according to the contract signing role. For example, at a first approval node of a reimbursement form, approval should be performed by a superior of a submission role, and at another approval node, the approval should be performed by a superior of a reimbursement role (the reimbursement role and the submission role may be different roles).
   In a conventional level approval method, only a submission role of an approval process can be used as a judgment criterion to determine a department level, and other roles or departments involved in a form cannot be customized as a criterion for determining the department level. There is certain limitation in usage.
   For example, in an approval process of a contract, a role signing the contract is on a leave and asks his/her colleague to initiate a contract approval process on behalf of him/her; the system considers his/her colleague as a submission role of the process, and determines a level based on the colleague during level approval, which cannot objectively reflect the department and position of the role signing the contract. For example, the role signing the contract is a salesman 1 in a market department, but the role of his/her colleague is a developer 1 in a research and development department. The contract should be originally approved by a supervisor of the department to which the signing role belongs, that is, a supervisor role in the market department. When an approval level of an approval node is set to 1, the system will assign the contract to be approved by a supervisor of the department to which the developer 1 belongs, that is, a supervisor role in the research and development department, causing an assignment error of the approval process and inconvenience in use.
   In the present application, according to requirements, in the case that an approval node is set, a signing role in a contract form may be selected as a level subject, and the signing role (rather than the submission role by default all the time) is used as a criterion for determining a level, so as to determine that the approval role is the supervisor role in the market department. The use is more flexible and convenient, and high universality is achieved.
[Embodiment 2] A method for setting approval roles at workflow approval nodes based on form fields includes a step of setting a system organization structure and a step of setting an approval role according to a department level. The step of setting the system organization structure includes the following sub-steps: SS1: creating departments and roles included in the system organization structure; and SS2: setting a hierarchical relationship among the departments, and setting a department supervisor role in each department, where as shown in FIG. 4, a department A is one level higher than a department B, and the department A is two levels higher than a department C.... The step of setting the approval role according to the department level includes: SSS1: selecting a level-based method for setting an approval role; SSS2: selecting one of a role attribute field, a department attribute field, or a submission role of an approval process in a form corresponding to the approval process as a level subject; and SSS3: filling in a specific level value n, n being a positive integer greater than or equal to 0 (the value of N may also be replaced with other symbols, for example, a, b, c, and d, where b is one level higher than a, c is two levels higher than a, d is three levels higher than a, and so on): selecting the role attribute field in the form corresponding to the approval process as the level subject, and determining a level by using the selected role as a judgment criterion; for example, when the submission role of the process is d2, but the selected role attribute field in the form is a signing role, the signing role is a role d3: ① when n=0, the selected role d3 serves as an approval role of the approval node; ② when n=1, a department supervisor role d1 in a department D to which the selected role d3 belongs serves as the approval role of the approval node; and if the selected role is the department supervisor role in the department to which it belongs, a department supervisor role in a department that is one level higher than the department to which the selected role belongs serves as the approval role of the approval node; ③ when n=2, a department supervisor role c1 in the department C that is one level higher than the department D to which the selected role d3 belongs serves as the approval role of the approval node; ④ when n=3, a department supervisor role b1 in a department B that is two levels higher than the department D to which the selected role d3 belongs serves as the approval role of the approval node; ⑤ when n=4, a department supervisor role a1 in a department A that is three levels higher than the department D to which the selected role d3 belongs serves as the approval role of the approval node; ⑥ the rest is done by that analogy; ⑦ when the setting of the department level exceeds a top-level department in the system organization structure, a department supervisor role in the top-level department serves as the approval role of the approval node; for example, for the role d3, the department level should be 4 at maximum, and when the department level is set to 6, the department supervisor role a1 of the top-level department A serves as the approval role of the approval node.
   ⑧ when n≥1, it is necessary to set that the approval node is approved by a specified group when "the selected role is the department supervisor role in the department to which it belongs and there is no higher level department over this department".
   (2) Selecting the department attribute field in the form corresponding to the approval process as the level subject, and determining a level by using the selected department as a judgment criterion: for example, the selected department attribute field in the form is a signing department, and the signing department is a department D: ① when n=0, a department supervisor role d1 of the selected department D serves as an approval role of the approval node; ② when n=1, a department supervisor role c1 in a department C that is one level higher than the selected department D serves as the approval role of the approval node; ③ when n=2, a department supervisor role b1 in a department B that is two levels higher than the selected department D serves as the approval role of the approval node; ④ when n=3, a department supervisor role a1 in a department A that is three levels higher than the selected department D serves as the approval role of the approval node; ⑤ the rest is done by that analogy; ⑥ when the setting of the department level exceeds a top-level department in the system organization structure, a department supervisor role in the top-level department serves as the approval role of the approval node; for example, for the department D, the department level should be 3 at maximum, and when the department level is set to 6, the department supervisor role a1 of the top-level department A serves as the approval role of the approval node.
   ⑦ when n≥1, it is necessary to set that the approval node is approved by a specified group when "there is no higher level department over the selected department".
   (3) Selecting the submission role of the approval process as the level subject, and determining a level by using the submission role as a judgment criterion. For example, if the submission role is a role d2: ① when n=0, the submission role d2 of the workflow approval process serves as an approval role of the approval node. When an approval role is set at an approval node, a department level n may be set to 0, that is, the submission role d2 itself is selected as the approval role in the approval node. Before the approval process is ended, the submission role d2 itself may confirm the approval, and may go back to re-approval after choosing a disagreement or enter the next link after choosing an agreement. A submission role reviewing process is added, thus avoiding the problem that a new approval process needs to be created (re-submitted) because the approval result is incorrect or the approval result is not compliant with the expectation of the submission role, thereby reducing the internal friction of the system, and improving the efficiency and reliability of the approval process.
   For example, when the submission role d2 submits a 10000 RMB reimbursement approval request, due to an error in the content submitted by the submission role d2 or other reasons, the approved reimbursement amount is modified to be 500 RMB after multistage approvals. Before the approval process is ended, the submission role, as the approval role, can review and confirm to find the problem, and may go back to re-approval after choosing a disagreement or enter the next link after choosing an agreement. Therefore, it is unnecessary to create a new approval process.
   ② When n=1, a department supervisor role d1 in a department D to which the submission role d2 of the workflow approval process belongs serves as the approval role of the approval node (if the submission role is d1, i.e., the department supervisor role in the department D to which it belongs, a department supervisor role c1 in a department C that is one level higher than the department D to which the submission role belongs serves as the approval role of said approval node); ③ when n=2, the department supervisor role c1 in the department C that is one level higher than the department D to which the submission role d2 of the workflow approval process belongs serves as the approval role of said approval node; ④ when n=3, a department supervisor role b1 in a department B that is two levels higher than the department D to which the submission role d2 of the workflow approval process belongs serves as the approval role of the approval node; ⑤ when n=4, a department supervisor role a1 in a department A that is three levels higher than the department D to which the submission role d2 of the workflow approval process belongs serves as the approval role of the approval node; ⑥ the rest is done by that analogy; ⑦ when the setting of the department level exceeds a top-level department in the system organization structure, a department supervisor role in the top-level department serves as the approval role of the approval node. For example, for the role d2, the department level should be 4 at maximum, and when the department level is set to 6, the department supervisor role a1 of the top-level department A serves as the approval role of the approval node.
   ⑧ when n≥1, it is necessary to set that the approval node is approved by a specified group when "the submission role is the department supervisor role in the department to which it belongs and there is no higher level department over this department". The approval by the specified group includes one of the following three cases: (1) the specified group is composed of one or more approval roles; (2) the specified group is determined according to the department level, during selection of the level subject, only the level subject selected for the approval node can be used continuously, and the level value n can only be set to 0; and (3) the specified group is determined according to the department level, the level subject can be selected independently, the specified group includes one or more specified nodes, and when the level value n of the specified node is not 0, a next-level specified node needs to be set, until the level value n of the specified node is 0, thereby completing the setting of the specified group of the approval node.
   A system provides an approval mechanism for a top-level department supervisor, which avoids the problem that the top-level department supervisor cannot finish the approval process by means of level approval.
   For example, when a chairman, as the top-level leader of an enterprise, submits an approval request, although there is no superior department over the chairman in level approval, a specified group is set to approve the approval request submitted by the chairman.
   The approval by the specified group includes one of the following three cases: ① the specified group is composed of one or more approval roles. For example, a plurality of members of the board of supervisors forms the specified group, and the approval request of the chairman is approved by the members of the board of supervisors. ② The specified group is determined according to the department level, during selection of the level subject, only the level subject selected for the approval node can be used continuously, and the level value n can only be set to 0. This is applicable to a case where the enterprise organization structure changes. For example, the original top-level supervisor of a company is a general manager, but after the organization structure has changed, a board of directors is newly added to the organization structure, and a chairman becomes the top-level supervisor; the level value in the approval node is 0, and then the approval role automatically becomes the chairman, rather than the general manager unchanged. This avoids the problem that the approval role cannot fit the change in the organization structure. ③ The specified group is determined according to the department level, the level subject can be selected independently, the specified group includes one or more specified nodes, and when the level value n of the specified node is not 0, a next-level specified node needs to be set, until the level value n of the specified node is 0, thereby completing the setting of the specified group of the approval node. This is applicable to a case where an ordinary department role approves an approval request submitted by a top-level department supervisor. For example, a financial supervisor of a financial department can approve invoice information involved in a contract approval request submitted by a chairman, and a final result needs to be confirmed by the chairman.
   When level approval is selected at an approval node, an approval permission is granted to each corresponding approval role in a level, and then all corresponding approval roles in the level have the same approval permission.
   For example, when n=1 and a3, b3, c3, and d3 submit approval processes respectively, corresponding approval supervisors are respectively a1, b1, c1, and d1 that have the same approval permission.
[Embodiment 3] As shown in FIG. 5, a workflow control method includes the following steps: S1: building a three-layer structure model of user-role-permission that includes: a role layer, wherein an operation subject of process approval in a workflow is a role, each role is an independent individual rather than a group or class, one role can only be related to a unique user during the same period, and one user is related to one or more roles; a permission layer composed of permissions required to be used in the execution of the workflow, wherein each permission is directly granted to a role, and a user layer, wherein a user determines an approval task in the workflow through a related role, and performs an approval operation with the permission of the related role; S2: as shown in FIG. 7, using the three-layer structure model to control the workflow, wherein one approval process includes a start node, at least one approval node, and an end node. The start node initiates or requests or submits the workflow. Further, the submission role initiates or requests or submits the workflow. Only a role having the permission to start a workflow can initiate or request or submit the workflow as the submission role. A system determines an approval process based on a form submitted by the submission role. One or more approval processes are designed for a form that requires a workflow, but one role can only select one approval process under the form (the same role can exist only in one of the processes of the same form). For example, there are two processes such as a P1 process and a P2 process in a purchase contract. If a role A is selected at a start node of the P1 process, the role A cannot be selected any more at the start node of the P2 process. In this case, approval of the purchase contract is added to the role A, and the purchase contract submitted for approval enters the P1 process automatically.
   The approval node sets a level of an approval department and grants an approval permission to a corresponding approval role in the level. The process comes to the end node and is then ended. S3: determining, according to a user's related role, an approval task to be processed, and performing an approval operation with the permission of the related role.
   One or more approval roles are selected at an approval node, one role can exist at different approval nodes in one approval process, and the approval role may own different permissions for viewing and modifying a form field at different approval nodes. Exemplary advantages are as follows: A role is a Chengdu sales manager 3, and in a contract approval workflow, the role exists at both approval nodes of Chengdu sales contract and Shanghai sales contract. At the approval node of the Chengdu sales contract, the role can view the content of all fields of the contract, such as a customer name, a contact person, contact information, a product quantity, a unit price of products, and a contract amount, and may modify the unit price of products and the contract amount. However, at the approval node of the Shanghai sales contract, the role cannot view the sensitive fields such as a customer name, a contact person, and contact information, and the like, and cannot make any modifications (alternatively, the role may be set to have the view permission but no modification permission).
   One or more approval roles are selected at an approval node, an approval role's permission is set at the approval node, and the permission can be independently set for each approval role of each approval node. For example, two approval roles, namely, a role A and a role B, are set at an approval node in the approval process of a contract form. It may be set that the role A is allowed to view a contract amount field in the contract form and the value of this field, and allowed to view a customer address field in the contract form and the value of this field. The role B is not allowed to view the contract amount field in the contract form, or is allowed to view the contract amount field but not allowed to view the value of this field. The value not allowed to be viewed may be shown with other symbols such as *. The role B can view the customer address field in the contract form and the value of this field.
[Embodiment 4] As shown in FIG. 6 and FIG. 8, the step S1 includes the following sequential sub-steps: S101 : creating a role, wherein each role is an independent individual rather than a group or class; S102: authorizing the roles created in the step S101 respectively; and S103: relating a user to a role, wherein one role can only be related to a unique user during the same period, and one user is related to one or more roles. The user determines the permissions through its relation to the role. If the permissions of the user need to be modified, the permissions possessed by the role are adjusted to achieve the purpose of changing the permissions of the user related to the role. Once the user is related to the role, the user owns all operation permissions of the role.
   A role is in a one-to-one relation to a user (when the role is related to one user, other users can no longer be related to the role; and if the role is not related to the user, the role can be selected to be related to another user). A user is in a one-to-many relation to roles (one user can be related to multiple roles at the same time).
   Definition of a role: A role is not in the nature of a group/class/category/post/position/work type or the like, but is of a non-collective nature. The role is unique and is an independent individual. Applied in an enterprise or an institution, the role corresponds to a post number (the post number herein is not a post, and one post may have multiple employees at the same time, but one post number can only correspond to one employee during the same period).
   For example, in a company system, the following roles may be created: a general manager, a deputy general manager 1, a deputy general manager 2, a manager of Beijing sales department I, a manager of Beijing sales department II, a manager of Beijing sales department III, a Shanghai sales engineer 1, a Shanghai sales engineer 2, a Shanghai sales engineer 3, a Shanghai sales engineer 4, a Shanghai sales engineer 5, and so on. The relation between users and roles is as follows: if Zhang San, the company's employee, serves as a deputy general manager 2 of the company and also serves as a manager of Beijing sales department I, roles to which Zhang San needs to be related are the deputy general manager 2 and the manager of Beijing sales department I, and Zhang San owns the permissions of the two roles.
   Authorization for a role: the system's authorization for a role includes, but is not limited to, authorization of a form, authorization of a menu, or authorization of a function. Authorization for the operation of a form includes, but is not limited to, addition, deletion, search and modification.
   The concept of conventional roles is a group/class/post/position/work type in nature, and one role can correspond to multiple users. In the present application, the concept of "role" is equivalent to a post number/work station number, and is also similar to the role in a film and television drama: one role in the same period (in childhood, juvenile, middle-age...) can be played by only one actor or actress at the same time, but one actor or actress may play multiple roles.
   Authorization for a role includes, but is not limited to, authorization of a form, authorization of a menu, or authorization of a function.
   The role belongs to a certain department, a name of the role is unique under the department, a number of the role is unique in a system, and the role is authorized according to work content of the role.
   If the user wants to change a department, it involves cross-department transfer. The specific operation process includes: (1) canceling the user's relation to the role in the original department; and (2) relating the user to a role in a new department.
   After the role is created, a user may be related to the role in the process of creating the user, or may be related to the role at any time after the user is created. After the user is related to the role, the user can be released from the relation to the role at any time, and the relation between the user and another role may be created at any time.
[Embodiment 5] The step S1 includes the following sequential sub-steps: S101: creating a role, wherein each role is an independent individual rather than a group or class; S102: relating a user to a role, wherein one role can only be related to a unique user during the same period, and one user is related to one or more roles; and S103: authorizing the roles created in the step S101 respectively.
   The role belongs to a certain department, a name of the role is unique under the department, and a number of the role is unique in a system.
   The workflow control method further includes a step of managing cross-department transfer of a user, which specifically includes: (1) canceling the user's relation to the role in the original department; and (2) relating the user to a role in a new department.
[Embodiment 6] The role is composed of: a post name + a post number, for example, a workshop worker 1, a workshop worker 2, a workshop worker 3, and so on. The role is an independent individual, and is equivalent to a concept of a post number or a work station number, but different from a role in a conventional permission management system. The concept of the role in the conventional permission management system is of a group or class nature such as a post, a position, a work type or the like.
[Embodiment 7] The following example shows the relationship among an employee, a user, and a role after Zhang San, an employee, enters a company as follows: 1. Recruiting: after the employee is recruited, the role of the corresponding post number or work station number is directly selected for the user (employee) to be related. For example, when Zhang San has joined the company (the company has assigned a user for Zhang San) and works at the sales department I to be responsible for sales of refrigerator products in Beijing area (the corresponding role is "sales engineer 5" under the sales department I), then the user Zhang San directly selects and is related to the role "sales engineer 5".
   2. Adding position: After Zhang San has worked for a period of time, the company will arrange Zhang San to be responsible for sales of TV products in Beijing area (the corresponding role is "sales engineer 8" under the sales department I) and to serve as a supervisor of an after-sales department (the corresponding role is "after-sales department supervisor 1). Therefore, two roles, that is, "sales engineer 8" under the sales department I and "after-sales department supervisor 1" under the after-sales department, are additionally related to the user Zhang San. In this case, the employee Zhang San is related to three roles: "sales engineer 5" and "sales engineer 8" under the sales department I, and "after-sales department supervisor 1" under the after-sales department. Therefore, the user Zhang San owns the permissions of the three roles.
   3. Reducing position: After a while, the company has decided to let Zhang San serve as an after-sales department manager (corresponding to a role "after-sales manager" under the after-sales department) without taking up other positions any more. Therefore, the user Zhang San is related to the role "after-sales department manager" under the after-sales department, and is released from the relation to the previous three roles ("sales engineer 5" and "sales engineer 8" under the sales department I, and "after-sales department supervisor 1" under the sales department). In this case, the user Zhang San owns only the permissions of the role "after-sales department manager" under the after-sales department.
   4. Adjusting permissions of a role (adjusting the permissions of the role itself): if the company has decided to add permissions to the after-sales department manager, the permissions only need to be added to the role of the after-sales department manager. With the increase in the permissions of the role of the after-sales department manager, the permissions of the user Zhang San are also increased.
   5. Resigning: After one year, Zhang San resigns. It is only necessary to cancel the relation between the user Zhang San and the role "after-sales department manager" under the after-sales department.

For example, during the dynamic operation of the company, recruiting and resigning of staff often occur continuously, but post numbers or work station numbers seldom change (or even remain unchanged within a period of time).

Conventional authorization method: In the case of a large quantity of system functions, authorizing a role conventionally as a group or class in nature involves a large and cumbersome workload and is very error-prone, and errors are not easily detectable in a short time and tend to cause loss to a system user.

Authorization method of the present application: in the present application, the role being a post number or work station number in nature is authorized, and the user is related to the role to determine its permissions. Therefore, the permissions of the user are controlled by only a simple user-role relation. Controlling the permissions is simple, easily operable, clear, and explicit, thereby significantly improving the efficiency and reliability of authorization.

The above is only a preferred embodiment of the present invention, and it should be understood that the present invention is not limited to the forms disclosed herein, and is not to be construed as being limited to the other embodiments, but may be used in various other combinations, modifications and environments. Modification can be made in by the techniques or knowledge of the above teachings or related art within the scope of the teachings herein. All changes and modifications made by those skilled in the art are intended to be within the protection scope of the appended claims.

## Claims

1. A method for setting approval roles at workflow approval nodes based on form fields, comprising a step of setting a system organization structure and a step of setting an approval role according to a department level:
wherein the step of setting the system organization structure comprises the following sub-steps:
SS1: creating departments and roles comprised in the system organization structure; and
SS2: setting a hierarchical relationship among the departments, and setting a department supervisor role in each department;
the step of setting the approval role according to the department level comprises:
SSS1: selecting a level-based method for setting an approval role;
SSS2: selecting one of a role attribute field, a department attribute field, or a submission role of an approval process in a form corresponding to the approval process as a level subject; and
SSS3: filling in a specific level value n, n being a positive integer greater than or equal to 0:
(1) selecting the role attribute field in the form corresponding to the approval process as the level subject, and determining a level by using a role corresponding to the field as a judgment criterion:
① when n=0, the role corresponding to the field serves as an approval role of the approval node;
② when n=1, a department supervisor role in a department to which the role corresponding to the field belongs serves as the approval role of the approval node; and if the role corresponding to the field is the department supervisor role in the department to which it belongs, a department supervisor role in a department that is one level higher than the department to which the role corresponding to the field belongs serves as the approval role of the approval node;
③ when n=2, the department supervisor role in the department that is one level higher than the department to which the role corresponding to the field belongs serves as the approval role of the approval node;
④ when n=3, a department supervisor role in a department that is two levels higher than the department to which the role corresponding to the field belongs serves as the approval role of the approval node;
⑤ when n=4, a department supervisor role in a department that is three levels higher than the department to which the role corresponding to the field belongs serves as the approval role of the approval node;
⑥ the rest is done by that analogy; and
⑦ when setting of the department level exceeds a top-level department in the system organization structure, a department supervisor role in the top-level department serves as the approval role of the approval node;
(2) selecting the department attribute field in the form corresponding to the approval process as the level subject, and determining a level by using a department corresponding to the field as a judgment criterion:
① when n=0, a department supervisor role in the department corresponding to the field serves as an approval role of the approval node;
② when n=1, a department supervisor role in a department that is one level higher than the department corresponding to the field serves as the approval role of the approval node;
③ when n=2, a department supervisor role in a department that is two levels higher than the department corresponding to the field serves as the approval role of the approval node;
④ when n=3, a department supervisor role in a department that is three levels higher than the department corresponding to the field serves as the approval role of the approval node;
⑤ the rest is done by that analogy; and
⑥ when setting of the department level exceeds a top-level department in the system organization structure, a department supervisor role in the top-level department serves as the approval role of the approval node;
(3) selecting the submission role of the approval process as the level subject, and determining a level by using the submission role as a judgment criterion:
① when n=0, the submission role of the workflow approval process serves as an approval role of the approval node;
② when n=1, a department supervisor role in a department to which the submission role of the workflow approval process belongs serves as the approval role of the approval node; and if the submission role is the department supervisor role in the department to which it belongs, a department supervisor role in a department that is one level higher than the department to which the submission role belongs serves as the approval role of the approval node;
③ when n=2, the department supervisor role in the department that is one level higher than the department to which the submission role of the workflow approval process belongs serves as the approval role of the approval node;
④ when n=3, a department supervisor role in a department that is two levels higher than the department to which the submission role of the workflow approval process belongs serves as the approval role of the approval node;
⑤ when n=4, a department supervisor role in a department that is three levels higher than the department to which the submission role of the workflow approval process belongs serves as the approval role of the approval node;
⑥ the rest is done by that analogy; and
⑦ when setting of the department level exceeds a top-level department in the system organization structure, a department supervisor role in the top-level department serves as the approval role of the approval node.

2. The method for setting approval roles at workflow approval nodes based on form fields according to claim 1, wherein when level approval is selected at an approval node, an approval permission is granted to each corresponding approval role in a level, and then all corresponding approval roles in the level have the same approval permission.

3. The method for setting approval roles at workflow approval nodes based on form fields according to claim 1, wherein the role attribute field and the department attribute field in the form are mandatory options.

4. The method for setting approval roles at workflow approval nodes based on form fields according to claim 1, wherein
the workflow control method comprises the following steps:
S1: building a three-layer structure model of user-role-permission that comprises:
a role layer, wherein an operation subject of process approval in a workflow is a role, each role is an independent individual rather than a group or class, one role can only be related to a unique user during the same period, and one user is related to one or more roles;
a permission layer composed of permissions required to be used in the execution of the workflow, wherein each permission is directly granted to a role; and
a user layer, wherein a user determines an approval task in the workflow through a related role, and performs an approval operation with the permission of the related role;
S2: using the three-layer structure model to control the workflow, wherein one approval process comprises:
one start node for initiating or requesting or submitting the workflow;
at least one approval node for setting a level of an approval department and granting an approval permission to a corresponding approval role in the level; and
one end node, to which the approval process comes and is then ended; and
S3: determining, according to a user's related role, an approval task to be processed, and performing an approval operation with the permission of the related role.

5. The method for setting approval roles at workflow approval nodes based on form fields according to claim 4, wherein one or more approval roles are selected at an approval node, one role can exist at different approval nodes in one approval process, and the approval role may own different permissions for viewing and modifying a form field at different approval nodes.

6. The method for setting approval roles at workflow approval nodes based on form fields according to claim 4, wherein one or more approval roles are selected at an approval node, an approval role's permission is set at the approval node, and the permission can be independently set for each approval role of each approval node.

7. The method for setting approval roles at workflow approval nodes based on form fields according to claim 4, wherein the step S1 comprises the following sub-steps:
(1) creating roles, wherein each role is an independent individual rather than a group or class;
(2) authorizing the roles created in the step (1) respectively; and
(3) relating a user to a role, wherein one role can only be related to a unique user during the same period, and one user is related to one or more roles, wherein,
the step (1) is performed first, and the step (2) and the step (3) have no sequential relationship.

8. The method for setting approval roles at workflow approval nodes based on form fields according to claim 1 or 4, wherein the role belongs to a certain department, a name of the role is unique under the department, and a number of the role is unique in a system; and
a specific step of managing cross-department transfer of a user comprises:
(1) canceling the user's relation to the role in the original department; and
(2) relating the user to a role in a new department.

9. The method for setting approval roles at workflow approval nodes based on form fields according to claim 1, wherein the user determines a permission through its relation to the role, one employee corresponds to one user account, and one user account corresponds to one employee.

10. The method for setting approval roles at workflow approval nodes based on form fields according to claim 1, wherein the role is composed of: a post name + a post number.

11. A method for setting approval roles at workflow approval nodes based on form fields, comprising a step of setting a system organization structure and a step of setting an approval role according to a department level:
wherein the step of setting the system organization structure comprises the following sub-steps:
SS1: creating departments and roles included in the system organization structure; and
SS2: setting a hierarchical relationship among the departments, and setting a department supervisor role in each department;
the step of setting the approval role according to the department level comprises:
SSS1: selecting a level-based method for setting an approval role;
SSS2: selecting one of a role attribute field, a department attribute field, or a submission role of an approval process in a form corresponding to the approval process as a level subject; and
SSS3: filling in a specific level value n, n being a positive integer greater than or equal to 0:
(1) selecting the role attribute field in the form corresponding to the approval process as the level subject, and determining a level by using a role corresponding to the field as a judgment criterion:
① when n=0, the role corresponding to the field serves as an approval role of the approval node;
② when n=1, a department supervisor role in a department to which the role corresponding to the field belongs serves as the approval role of the approval node; and if the role corresponding to the field is the department supervisor role in the department to which it belongs, a department supervisor role in a department that is one level higher than the department to which the role corresponding to the field belongs serves as the approval role of the approval node;
③ when n=2, the department supervisor role in the department that is one level higher than the department to which the role corresponding to the field belongs serves as the approval role of the approval node;
④ when n=3, a department supervisor role in a department that is two levels higher than the department to which the role corresponding to the field belongs serves as the approval role of the approval node;
⑤ when n=4, a department supervisor role in a department that is three levels higher than the department to which the role corresponding to the field belongs serves as the approval role of the approval node;
⑥ the rest is done by that analogy;
⑦ when setting of the department level exceeds a top-level department in the system organization structure, a department supervisor role in the top-level department serves as the approval role of the approval node; and
⑧ when n≥1, it is necessary to set that the approval node is approved by a specified group when "the role corresponding to the field is the department supervisor role in the department to which it belongs and there is no higher level department over the department";
(2) selecting the department attribute field in the form corresponding to the approval process as the level subject, and determining a level by using a department corresponding to the field as a judgment criterion:
① when n=0, a department supervisor role in the department corresponding to the field serves as an approval role of the approval node;
② when n=1, a department supervisor role in a department that is one level higher than the department corresponding to the field serves as the approval role of the approval node;
③ when n=2, a department supervisor role in a department that is two levels higher than the department corresponding to the field serves as the approval role of the approval node;
④ when n=3, a department supervisor role in a department that is three levels higher than the department corresponding to the field serves as the approval role of the approval node;
⑤ the rest is done by that analogy;
⑥ when setting of the department level exceeds a top-level department in the system organization structure, a department supervisor role in the top-level department serves as the approval role of the approval node; and
⑦ when n≥1, it is necessary to set that the approval node is approved by a specified group when "there is no higher level department over the department corresponding to the field";
(3) selecting the submission role of the approval process as the level subject, and determining a level by using the submission role as a judgment criterion:
① when n=0, the submission role of the workflow approval process serves as an approval role of the approval node;
② when n=1, a department supervisor role in a department to which the submission role of the workflow approval process belongs serves as the approval role of the approval node; and if the submission role is the department supervisor role in the department to which it belongs, a department supervisor role in a department that is one level higher than the department to which the submission role belongs serves as the approval role of the approval node;
③ when n=2, the department supervisor role in the department that is one level higher than the department to which the submission role of the workflow approval process belongs serves as the approval role of the approval node;
④ when n=3, a department supervisor role in a department that is two levels higher than the department to which the submission role of the workflow approval process belongs serves as the approval role of the approval node;
⑤ when n=4, a department supervisor role in a department that is three levels higher than the department to which the submission role of the workflow approval process belongs serves as the approval role of the approval node;
⑥ the rest is done by that analogy;
⑦ when setting of the department level exceeds a top-level department in the system organization structure, a department supervisor role in the top-level department serves as the approval role of the approval node; and
⑧ when n≥1, it is necessary to set that the approval node is approved by a specified group when "the submission role is the department supervisor role in the department to which it belongs and there is no higher level department over the department";
the approval by the specified group comprises one of the following three cases:
(1) the specified group is composed of one or more approval roles;
(2) the specified group is determined according to the department level, during selection of the level subject, only the level subject selected for the approval node can be used continuously, and the level value n can only be set to 0; and
(3) the specified group is determined according to the department level, the level subject can be selected independently, the specified group comprises one or more specified nodes, and when the level value n of the specified node is not 0, a next-level specified node needs to be set, until the level value n of the specified node is 0, thereby completing the setting of the specified group of the approval node.
